(19) **Europäisches Patentamt / European Patent Office / Office européen des brevets**

(11) **EP 1 760 875 A1**

(12) # EUROPEAN PATENT APPLICATION

(43) Date of publication:
**07.03.2007 Bulletin 2007/10**

(51) Int Cl.:
**H02P 8/08** *(2006.01)*

(21) Application number: **05018747.5**

(22) Date of filing: **30.08.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Protronic N.V.**
**8900 Ieper (BE)**

(72) Inventors:
• **Lewyllie, Dirk**
  **8940 Wervik (BE)**
• **Van den Abeele, Griet**
  **9950 Waarschoot (BE)**

(74) Representative: **Bird, Ariane et al**
**Bird Goën & Co**
**Klein Dalenstraat 42A**
**3020 Winksele (BE)**

(54) **Method and apparatus detecting an operating state of a motor**

(57) A controller (10) measures an induced voltage (203) across at least one phase of a motor, such as a stepper motor, a permanent magnet motor, a brushless DC motor or similar, during an operational cycle of the motor. The measured voltage is compared with a stored value indicative of an expected voltage for that part of the operational cycle of the motor to derive a difference. The controller determines that a particular operating state (e.g. stall, degree of wear) has occurred when the difference exceeds a threshold value (204). The induced voltage can be measured when the motor has been brought up to a constant operating speed and while the phase is de-energised. The controller can use this method during an initialisation cycle, to detect stall caused by the rotor or external load hitting a mechanical stop or during normal operation. The controller can determine a reference position associated with stall of the motor caused by a mechanical stop with an accuracy that is greater than level of one step of the step motor.

Fig. 2

# EP 1 760 875 A1

**Description**

FIELD OF THE INVENTION

This invention relates to a method of detecting an operating state, such as stall, of a motor such as a stepper motor, a permanent magnet motor, to such a motor able to perform the method and to a controller and software for performing the method.

BACKGROUND TO THE INVENTION

It is known to initialise a stepper motor to a reference position which is determined, for example, by a mechanical stop. Such a system is cost effective as it can a void the need for sensors or actuators such as proximity switches, mechanical limit switches or light barriers to monitor the position of the motor. Providing these sensors or actuators incurs an additional expense in the form of parts, assembly time and increased volume of the overall structural unit.

It is known, for example from EP 0 763 613, to initialise a stepper motor by applying sufficient pulse sequences to the windings of the motor to cause the motor to push against a stop in a known position. The position reached, after the pulse sequences are terminated, is considered as the reference position. This method has been found to have several drawbacks. A first drawback is that to certainly reach the stop the number of applied pulse sequences must correspond to the maximum possible offset from the reference position. Since the motor will rarely be displaced from the reference position by the maximum possible offset, a sequence of pulses will usually be provided to the motor while the motor is already pushed against the stop. This leads to noise, increases wear and unnecessarily increases the duration of the initialisation cycle. A second drawback relates to the structure of the pulse sequences provided to the motor. For a two phase step motor one pulse sequence might look like this:

| Relative Step | Phase A | Phase B |
|---------------|---------|---------|
| 0 | + | + |
| 1 | - | + |
| 2 | - | - |
| 3 | + | - |

A complete revolution of the rotor requires a sequence of 4 steps or a multiple of sequences of 4 steps, for a two phase step motor. The steps associated with each of the individual pulse combinations are referred to as a respective relative step. Extensive measures must be taken to make sure that in assembly the stop is exactly associated with relative step of the motor, for example, the relative step 0 of the motor. Failing to meet this requirement, or loss of this association caused, for example, by wear to the stop or random operating conditions, can lead to serious consequences in operating the stepper motor. The above mentioned conditions could leave the stepper motor in a relative step other then 0 when pushed against the stop or leave the motor at relative step 0 but not pushing against the stop. This causes a misalignment between the magnetic stator field and the magnetic field of the rotor. It is uncertain if the rotor remains pushed against the stop in a position associated with a relative step other then 0 or jumps back and comes to rest at a position associated with a relative step 0 that is a certain distance in front of the stop. In applications where a high level of precision is required this means that the reference can only be determined to within a distance corresponding to four relative steps. In applications where for example high accelerations are required this could lead to supplying an erroneous initial pulse combination to the phases of the step motor leading to serious failure in operating the motor. Therefore, extensive measures must be taken in design of the corresponding structural unit and during assembly of it to ensure alignment of the stop with, for example, relative step 0 of the stepper motor.

EP 382 887 describes a sensorless method for initialising a step motor. This method will be summarised for a two phase motor. One phase (e.g. Phase A) is coupled by switches to a drive circuit, while the second phase (Phase B) is coupled by switches to a detector circuit. A current pulse is provided to phase A. After a pause, the detector is activated to detect whether or not an induced voltage (back-emf) is generated in phase B, i.e. whether the rotor is still moving. If a back-emf is detected (i.e. the rotor is still moving) then this procedure is repeated but now phase B is coupled by switches to the drive circuit, while phase A is coupled by switches to a detector circuit. A complete pulse sequence for one rotation of the rotor may look like this:

| Relative Step | Driver Phase A | Driver Phase B | Detector Phase A | Detector Phase B |
|---|---|---|---|---|
| 0 | + | 0 | | X |
| 1 | 0 | + | X | |
| 2 | - | 0 | | X |
| 3 | 0 | - | X | |

If, during the execution of this method, the back-emf signal is no longer detected it is deduced that the stop has been reached and the associated reference position is stored in memory. It is clear that this method is limited to detecting the reference position with a precision associated with one relative step. This method can be slow and, because of the pause after every step, the back-emf signal is fairly weak. Another drawback is that the motor and the associated structural unit has to be brought to movement from close to complete rest every step during initialisation with only one phase activated. The maximum holding force when the motor is at rest and maximum torque of one phase impose limits to the load and inertia of the associated structural unit. Another drawback is that the precision is limited to that associated with one relative step of the motor. In applications where high precision is required this can be insufficient. Finally, additional switches and control logic associated with these switches has to be provided in addition to that needed for a conventional stepper drive.

The present invention seeks to provide an improved way of detecting an operating state of a motor.

SUMMARY OF THE INVENTION

The present invention seeks to provide an improved way of detecting an operating state, such as stall, of a motor, such as a stepper motor, a permanent magnet motor, to provide a motor able to perform the method and/or a controller and/or software for performing the method.

A first aspect of the present invention provides a controller for detecting an operating state of a motor, the controller comprising control logic which is operable to:

measure an induced voltage across at least one phase of the motor during an operational cycle of the motor;
process the measured voltage for that part of the operational cycle of the motor to derive a processed value; and
determine that the operating state has occurred when the processed value exceeds a threshold value. The motor may be a stepper motor, a permanent magnet motor, a brushless DC motor or similar.

According to a preferred embodiment processing the measured voltage comprises comparing the measured voltage with a stored value indicative of an expected voltage for that part of the operational cycle of the motor to derive a difference voltage. The operating state is determined when the difference voltage exceeds a threshold value.

Two examples of operating states that can be determined in this way are a stall condition and a particular degree of wear of the motor and/or it's associated apparatus.

In a p referred embodiment the operating state is a stall condition, e.g. at an exact stop position of the motor when arranged in a system with a stop.

The controller can use this method during an initialisation cycle to detect stall caused by the rotor, or external load, hitting a mechanical stop. Alternatively, the controller can use this method during normal operation to detect when a stall condition occurs. In embodiments of the present invention the controller can determine a reference position associated with stall of the motor caused by a mechanical stop with an accuracy that is greater than a level of one step of the step motor. This method makes it possible to use this reference position in an improved control of the motor and control apparatus associated with the motor.

The controller can have one or more of the following benefits:

more particularly detecting the position of the rotor when a stall occurs,
being simple to implement, robust,
allowing a complete initialisation cycle to be performed more quickly.

A further aspect of the invention provides a method of detecting an operating state of a motor such as a stepper motor, a permanent magnet motor, a brushless DC motor or similar.

The functionality described here can be implemented in software, hardware or a combination of these. Accordingly, another aspect of the invention provides software for performing the method of detecting an operating state of a motor, e.g. a stepper motor, a permanent magnet motor or similar. The software may be installed at the time of manufacture or commissioning of the motor or it may be installed at a later date as an upgrade to the controller. The software may be stored on an electronic memory device, hard disk, optical disk or other machine-readable storage medium. The software may be delivered as a computer program product on a machine-readable carrier or it may be downloaded directly to the controller via a network connection.

BRIEF DESCRIPTION OF THE DRAWINGS

Embodiments of the invention will be described with reference to the accompanying drawings in which:

Figure 1 schematically shows a stepper motor and controller;
Figure 2 shows a flow chart for a method of operating the motor;
Figure 3 shows one phase of the motor of Figure 1 in more detail;
Figures 4 and 5 show induced voltages in each of the phases of the stepper motor during operation;
Figure 6 shows the induced voltage in one phase of the stepper motor over a number of operating cycles;
Figure 7 shows a graph of the difference in induced voltage between successive operating cycles;
Figure 8 shows stall occurring at a particular point in an operating cycle;
Figure 9 shows a way of detecting stall of the type shown in Figure 8 in accordance with an embodiment of the present invention;
Figure 10 shows the use of multiple thresholds to detect different operating states in accordance with an embodiment of the present invention;
Figure 11 schematically shows a stepper motor with 5 phases.
Figure 12 show induced voltages in each of the phases of the stepper motor during operation;
Figure 13 is a table of drive se quences for maintaining the stepper motor at constant speed;
Figure 14 show induced voltages in each of the phases of the stepper motor of a three phase embodiment of figure 12,
Figure 15 is a table of drive sequences for a three-phase embodiment of figure 13.

DESCRIPTION OF PREFERRED EMBODIMENTS

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. Where the term "comprising" is used in the present description and claims, it does not exclude other elements or steps. Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.
Further, the present invention will be described with reference to a stepper motor but is not limited thereto. For instance the present invention can, instead of a stepper motor, also make use of a permanent magnet motor, a brushless DC motor, any motor that can generate a back emf(Bemf) or any similar motor.

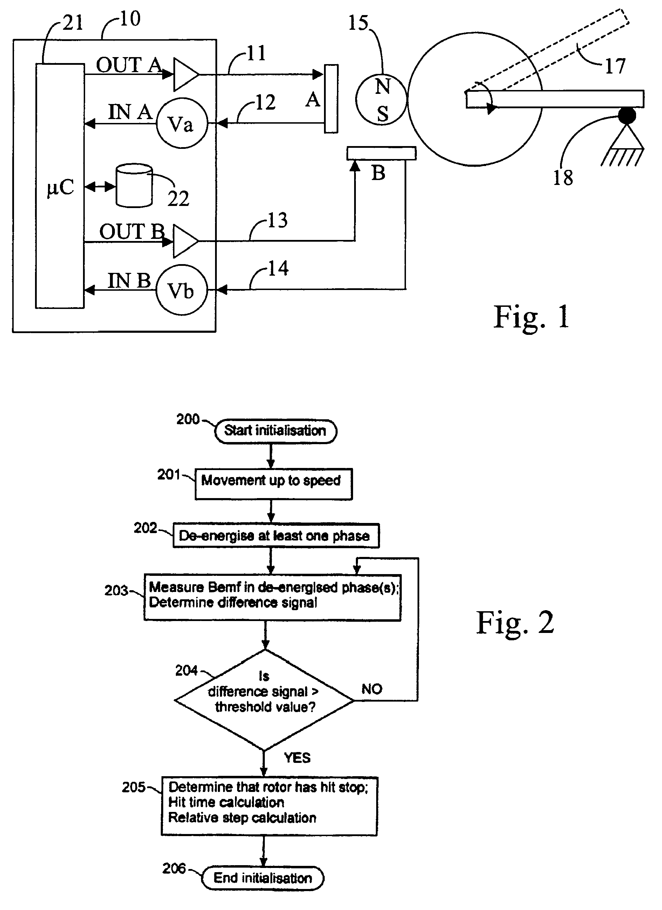

Figure 1 schematically shows a two-phase stepper motor system. The present invention is not limited to two phase motors but includes within its scope single phase and multiphase motors.
Returning to Fig. 1, the two phases are labelled A and B. In a known manner, each phase A, B includes a winding which can be selectively energised by a controller 10 to drive a permanent magnet rotor 15. An output shaft of the motor drives an external load 17 which can be moved across a range of positions. One end of the range of movement is defined by a mechanical stop 18. The movement imparted to the load may be rotational, linear or any combination of these in 2 or 3 dimensions, e.g. a movement driven by a cam follower, simple rotation, simple linear, cycloidal, etc. In operation, the load 17 can be moved into a position where it presses against the stop 18 and this condition is sensed by the controller 10. In the field of weaving machines, the stepper motor can be used to move a weft thread between a rest position and a feed position as described more fully in EP 0 763 613. Any form of transmission may be provided between the motor and the load, e.g. a gear chain, a gearbox or a crank mechanism, cam, etc. The form of the transmission is not a limitation on the present invention.
In Fig. 1 a two phase steppermotor is shown having a rotor 15 and two phases A and B. By turning the motor the load 17 can be moved against the stop 18 via any suitable transmission means. The representation in Fig. 1 is not limiting on the present invention. The present invention includes motors with any number of two phases and also those with several groups of two phases arranged around the motor at different angular positions, e.g. such that, for example, 200 steps per revolution can be obtained. This allows moving in steps of 1,8 degrees. Whereas Fig. 1 only shows two phases A and B, any number may be used, for instance, 50 such two phase systems can be provided that are "shifted" 7.2 degrees with respect to each other. By this means 200 steps can be obtained. In this way fine movement control is obtained of the motor and there may lead to a reduced complexity of the transmission between motor an load. A controller for the motor may be provided which allows groups or sets of two phases to be selected, e.g. during start-up.

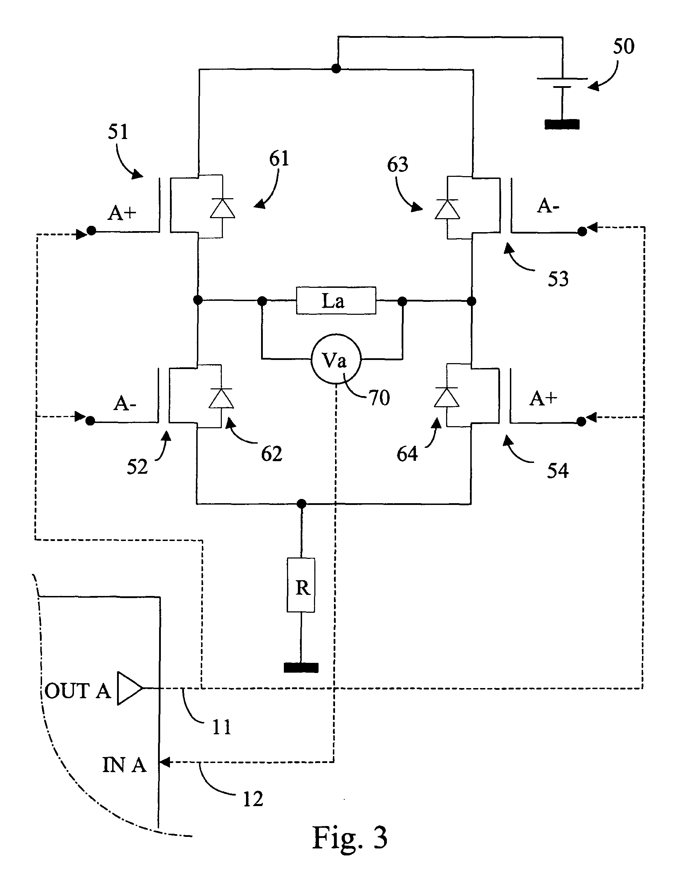

Figure 3 shows a drive circuit for Phase Ain more detail. This is generally known as a full H-Bridge and the operation will be familiar to a skilled person. A winding La is selectively connected to a supply 50 by operating switches 51-54. Turning on switches 51 and 54 will cause a current to flow through winding La in a first direction (left to right), which will be called A+. Turning on switches 53 and 52 will cause a current to flow through winding La in the opposite direction (right to left), which will be called A-. The direction of current flow determines the polarity of the resulting magnetic field at the winding. A protection diode 61-64 is coupled across each of the switches. The voltage across the winding can be monitored by a detector Va 70 and a signal 12 representing the detected voltage is fed to controller 10. Phase B has the same layout as shown for Phase A. The voltage across winding Lb is detected and a signal 14 representing this voltage is fed to controller 10. Detector Va 70 is used to detect the induced voltage, or back emf (Bemf), across the winding La. The back emf across the winding La can be detected continuously or when the winding is not energised. It will be appreciated that other types of driver circuit can be used to apply current to the windings, and this is not important to the invention. According to embodiments of the present invention the detector Va 70 can be incorporated into motor or into the controller 10, so that detector Va 70 is not a separate element or can be placed anywhere else in the system.

Figure 2 shows the steps of the method for initialising the stepper motor. The method is performed by controller 10. Instructions, s tored i n storage device 22, are executed by processor 21. Samples of induced voltage are stored in a memory within processor 21 or on storage device 22. After entering 200 the initialisation mode, the controller proceeds to step 201 and the motor is brought to a constant speed by activating both phases A, B with a conventional pulse sequence of the type shown below:

| Relative Step | Phase A | Phase B |
|---|---|---|
| 0 | + | + |
| 1 | - | + |
| 2 | - | - |
| 3 | + | - |

In relative step 0, switches 51, 54 of Phase A are operated to cause current to flow in a positive direction through winding La, and the same occurs in Phase B. In relative step 1, switches 53, 52 of Phase A are operated to cause current to flow in a negative direction through winding La, while Phase B continues to operate in the same way as for Relative step 0. Once the rotor is moving at a required operating speed, the controller proceeds to step 202. One phase is made floating or is switched off i.e. the winding in that phase is not energised at each step of the operating cycle.

In this example Phase B is made currentless. On relative step 1 (A-, B+) Phase B is made currentless. The constant speed is maintained by pulse sequences provided to phase A:

| Relative Step | Phase A |
|---|---|
| 1.5 | - |
| 3.5 | + |

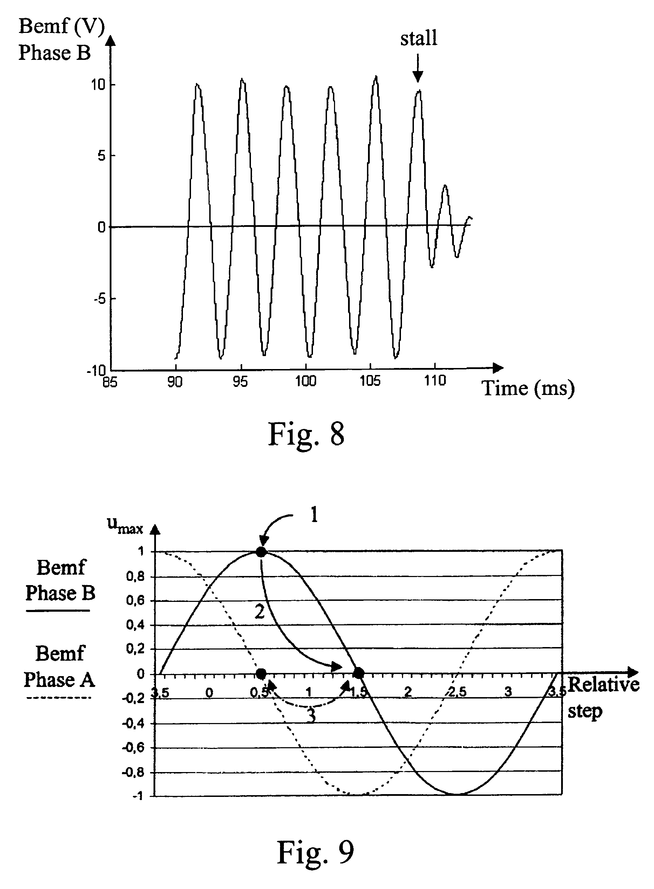

The importance of selecting relative steps 1.5 and 3.5 is that this can make sure that the rotor will continue to turn. It is preferred to have first a half step to be sure that the full step can be taken. This can be seen from Fig. 9, where a half step is shown. The half step is optional.

At step 203 the controller 10 receives signal 14 corresponding to the detected Bemf across winding Lb in Phase B. The Bemf in Phase B is detected as $u = \dfrac{d\Psi}{d\theta} v$ when i=0 and $\dfrac{di}{dt} = 0$, where v = velocity

$\dfrac{d\Psi}{d\theta}$ = change of measured voltage over angle

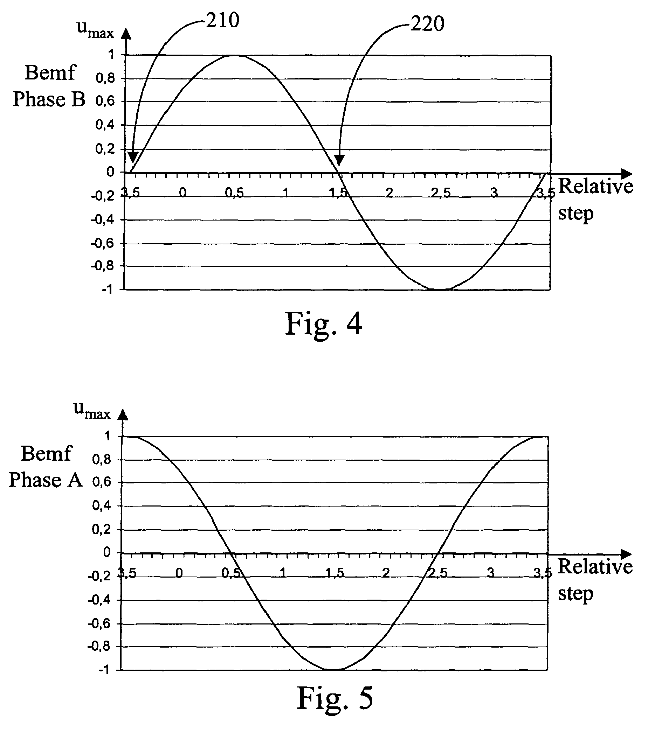

Stall detection is greatly simplified when v can be considered to be constant, but it can also be realised as soon as v is considered to be known. Figure 4 shows the relationship between the measured B emf in Phase B to the relative step during one complete step sequence for the motor. The rate at which the Bemf is sampled determines the resolution of the eventual position determination. Phase B can be sampled at a rate of, for example, 32 samples per completed step sequence. A number of consecutive samples are stored in the memory of a processor 21, or external memory 22, for subsequent calculations.

Each sample of the detected Bemf can be stored or buffered. After each sample is received, the current sample from the current operational cycle is for example compared with the corresponding sample from the previous operational cycle. A difference is calculated between corresponding samples. When a stall occurs, i.e. when the rotor 15 or external load 17 hits the mechanical stop 18, the difference between the value of the current sample of the measured Bemf in phase B and the value of the measured Bemf stored for a corresponding sample of the previous step sequence will rise above a certain threshold. Step 204 checks whether the threshold is exceeded. If the threshold is not exceeded the controller determines that a stall has not occurred and continues to sample the Bemf, compute the difference and monitor for exceeding the threshold in a further iteration of steps 203, 204. If the threshold is exceeded then a stall is determined to have occurred and the controller proceeds to step 205.

For example, a hit time calculation can then be performed by determining the number of samples that have been stored in memory since the occurrence of a particular event where the relationship between the induced voltage and rotor position is known. Referring to Figure 4, in this example, the event is taken to be the time at which the induced voltage Bemf in Phase B makes a positive zero-crossing, i.e. point 220. For this example it will be assumed that a complete operating cycle (i.e. one revolution of the rotor) comprises 32 samples of the induced voltage. The hit time calculation determines that 16 samples have been recorded since the zero-crossing event last occurred at point 210. The positive zero-crossing of the Bemf in phase B at point 210 is known to be related to relative step 3.5. As 16/32 samples have occurred (half of one operating cycle) since relative step 3.5, the reference position associated with the mechanical stop can easily be calculated to be at half of one cycle displaced from relative step 1.5.

In a final step of the method according to the invention the motor is stopped after stall detection. The rotor is not driven any further, thus preventing any wear between the rotor and the stop 18. The detected reference position 220 and the associated calculated relative step can now be stored. Depending on the system, this information can be stored in the memory and/or program of the motor controller 10. It can also be used in an improved control of the stepper motor or an improved control of the structural unit associated with the stepper motor. The information to be stored may include the start position and all further movements are related to this start position in the form of a difference or offset. The motor will than start at a defined relative position that can be made precise. Hence a load that changes with its angular position is referred to a reference point. If the motor is not related to that reference point, than the motor control will assume that the load value is different and the motor control will act as if that load is different. In this aspect of the present invention the control of the motor is always synchronised with the actual load, e.g. the load in a correct and precise angular position.

A controller and a method for controlling according to the present invention may be used, as an example only and not intended to be limited thereto, to control a motor for feeding weft yarns to an insertion device of a weaving machine, as described in more detail in EP 763 613. The yarn feeders described are associated with a drive motor, which is directly connected to the yarn feeder. A fixed rest position for the yarn feeders is needed, therefore, the drive motor needs to be initialised, and this may be done in accordance with embodiments of the present invention.

The precision of the detection in accordance with embodiments of the present invention is not limited by the precision associated with one relative step of the stepper motor, but only by the selected sample rate of the measurement of the B emf in the currentless phase. No additional switching elements and switching logic is required above the conventional drive elements of a stepper motor. Measurement of the Bemf after the rotor has reached a constant speed creates a clean and large Bemf signal that can be easily processed. Bringing the motor up to speed with all phases does not impose additional requirements to the motor during initialisation to those during normal operation. In addition to the increase in precision there is a reduction in the time needed to complete the initialisation process since it is stopped as soon as stall is detected and it is performed while the motor operates at a constant speed. This also affects the systems robustness in view of wear, assembly and design tolerances, random operating conditions, mounting spare parts in the corresponding structural unit.

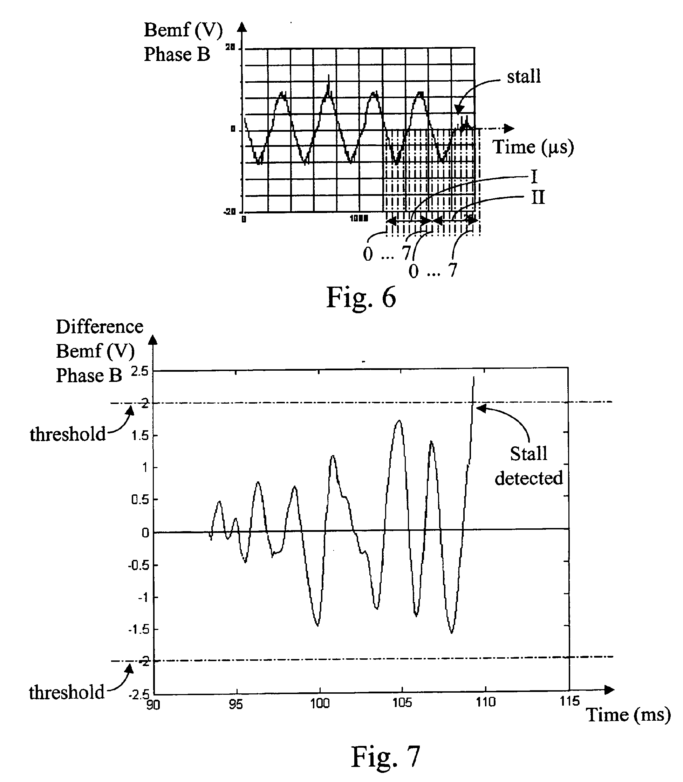

Figures 6 and 7 further describe the process of calculating a difference and determining whether a threshold has been exceeded. Figure 6 shows a measured signal for Bemf of Phase B during the period when the motor is operating at normal speed. The Bemf signal could also be passed through a low pass filter before it is processed to determine the difference. In Figure 6 an example is illustrated with a sample rate of 8 samples per completed step sequence. The corresponding difference signal is shown in Figure 7. The difference signal is derived by calculating the difference between the measured sample of Bemf in phase B and a corresponding sample of the previously completed step sequence. Thus, the difference is taken between a new sample 0 of step sequence II and the corresponding sample (sample 0) from step sequence I. Similarly, when sample 1 arrives in sequence II, sample 1 from step sequence I is subtracted from sample 1 of sequence II and so on. Stall is detected when this difference signal of the Bemf of phase B rises above a certain threshold. In Figure 7 this threshold is set at 2V. Positive and negative thresholds are provided 231, 232. If, for example, in Figure 7 the difference signal of the Bemf of phase B that was calculated on the basis of sample 4 of step sequence II rising above this threshold, the hit time can be calculated to be the time related to half (4/8) of a complete step sequence and the reference position associated with the mechanical stop can easily be calculated to be at relative step 1,5 since sample 0 corresponds to relative step 3,5. It will be understood that the threshold value 231, 232 can be set at a value which is found to offer the most accurate detection of a stall. The threshold may be a positive value, a negative value or only the absolute value is used. It is an advantage of this method that a clean stall detection is obtained. The execution time to obtain stall detection is shorter than with prior art methods as it is done under constant speed. Furthermore, the precision of the detection is determined by the sample rate and may therefore be better than the precision of prior art methods, which are limited to one step on, depending on the sample rate chosen. This may be of use in applications where a more accurate precision is needed, or it may allow to use a simpler motor with e.g. less steps. No supplementary sensors are needed, and no complexity is added to the motor in order to obtain the advantages obtained according to the present invention.

From the above description, it will be appreciated that the controller need only store a window of samples which are sufficient to make the comparison and derive the difference signal. As an example, where 32 samples are taken per cycle, the memory may store 64 samples, representing two complete operating cycles. However, the storing of samples is an option and the control can be done in real time.

It has been found that, under exceptional circumstances, there is a possibility that a stall can occur when the maximum of the measured Bemf in phase B and that, after occurrence of the stall, the Bemf drops to 0 with approximately the same rate as that what would be generated during rotation of the motor at the initialisation speed. As a consequence of this, the corresponding difference signal would not exceed the threshold until a considerable period after the occurrence of the stall. This situation could lead to an erroneous stall detection and corresponding errors in hit time calculation and relative step calculation. This problem can be solved in a number of ways, in order to design systems with a high robustness.

For a two phase stepper motor, it is possible to execute the method first by making phase B currentless to measure its Bemf and afterwards executing the method a second time with making phase A currentless to measure its Bemf The present invention includes only a single measurement but it is preferred if two measurements are made. If the load has reached a stop, the motor can return and make a second measurement.

As there is a phase shift of 90° between both measured Bemf signals, erroneous stall detection could not occur in both signals. If the hit-time, e.g. the relative step calculated from the difference signal of the Bemf of phase B differs from that one calculated from the difference signal of the Bemf of phase A then an erroneous stall detection occurred during one of the executions of the method. Based on the calculated hit time and associated calculation of the relative step from both phases the correct hit-time or relative step can be calculated resulting in correct stall detection and be the basis of correct calculation of the related relative step. Figure 9 shows an example of how this calculation could be performed for a two phase step motor. The rotor hits the stop at a position associated with relative step 0,5, which is associated with the top of the measured Bemf of phase B. As explained above exceptional circumstances could lead to the situation that the difference signal doesn't reach the threshold until a hit-time is reached which can be associated with relative step 1,5. A subsequent execution of the method with measurement of the Bemf in Phase A would result in a hit time that is associated with the relative step 0,5. As a difference is detected between the relative steps calculated from both initialisation cycles it is clear that the exceptional situation described above has taken place. The correct relative step can now be determined by simple calculations to be 0,5. Some examples of such calculations are given below or are stored in the table below :

| Rel. step from Bemf B | Rel. step from Bemf A | Corect rel. step |
|---|---|---|
| 3.5 | 0.5 | 3.5 |
| 1.5 | 0.5 | 0.5 |
| 1.5 | 2.5 | 1.5 |
| 3.5 | 2.5 | 2.5 |

An alternative way of solving this problem for a two phase stepper motor is to bring the motor up to a speed where, based on the inertia of the motor and the associated structural unit, a constant speed could be assumed during the remaining initialisation sequence when both phase A and phase B are made currentless. Both Bemf signals from both phases can be processed concurrently in the same way. As soon as stall is detected, based on the Bemf measured in one of the phases, the motor can be stopped.

As the circumstances described above are exceptional in nature the method according to the invention could be executed without using the solutions described above, or provisions could be taken in the choice of the motor or the design of the associated structural unit to eliminate the occurrence of these circumstances.

The embodiment described above has two phases but it should be understood that the invention is not limited to a two-phase motor, and can be applied to motors having only a single phase and to motors having more than two phases.

In an embodiment of the present invention, the stepper motor has only a single phase. In accordance with this embodiment the motor can be brought up to a speed and the single phase is then made currentless. Based on the inertia of the motor and the associated structural unit, a constant speed can be assumed during the remaining initialisation sequence when its phase is made currentless. As soon as stall is detected based on the Bemf measured in this phase, the motor can be stopped.

Referring again to Figure 2, the final step 206 is "end initialisation". This step can be executed in various ways, any one of which is an embodiment of the present invention. Once a stall has been detected, the controller 10 can simply end the pulse sequences that are normally provided to the motor, thus stopping the motor aligned with the mechanical stop 18. Alternatively, the controller 10 can actively brake the motor by providing it with certain pulse sequences to keep the rotor steady as soon as it has pushed against the stop 18. In another example, the speed of execution of the method according to the invention could lead to the motor bouncing back after it has hit the stop. Pulse sequences could subsequently be provided to gently align the rotor with the stop 18 again. In another example, as the motor has reached the stop, or has bounced against it, the motor can be moved to a desired position at a certain number of steps offset from the stop. In another example, where two stops are provided at each extreme of the range of movement of the rotor/ external load, the method according to the invention could be executed to send the motor towards the first stop. As soon as the first stop is detected, the method according to the invention could be executed again to send the motor towards the second stop. Also a single reference can be used even when there are two stops, e.g. an average of the two stop positions can be used as the reference. Thus in accordance with the present invention the reference can be at any suitable position and not necessarily at a stop position.

It is clear that apart from using the difference signal generated from the measured Bemf signal, other means exist for processing the measured Bemf signal in order to be able to detect stall of the motor. For example, a Fourier transformation of the signal can be made which provides frequency or harmonic information of the system. If the amplitudes of one or more of the harmonics change, this is a signature for a stop. This signature can be used to detect a stop. An alternative signal processing can be in the form of a filter that filters at certain frequency or in a certain frequency band such as a high pass or low pass band or obtains other harmonic information corresponding to a constant speed. I f this filtered signal representative of a constant speed is not detected within a threshold value, than there is a stall. For example, if the motor turns at a constant speed, a first harmonic of this speed will have a certain amplitude. If the motor is stopped, this first harmonic shall not be present, so this voltage will not be detected any more. Another voltage at another frequency might be present. From this information it can be determined when the motor is stopped.

The hit-time calculation at step 205 can use other parameters, for example the measured Bemf at the moment immediately preceding stall or other know resolver methods to determine the moment in the step sequence where stall occurs and to calculate the corresponding relative step.

It is preferred to detect stall by measuring the Bemf in at least one currentless (de-energised) phase. However, it is also possible to perform the method when a current is present. However the current in the phase should be known or measured because then the equation describing the measured tension $\left( u = ri + L\dfrac{di}{dt} + \dfrac{d\Psi}{d\theta}v \right)$ remains

solvable and thus stall detection remains possible. Stall detection is greatly simplified if the phase on which the tension measurement is performed approaches the ideal currentless state since $i = 0$ and $\dfrac{di}{dt} = 0$. In practice, when performing a tension measurement a limited current will be generated in the measurement circuit and thus the measured phase.

The embodiment described above calculates a difference signal in the Bemf between two measured cycles of a currentless phase. The difference signal can also be generated by comparing the measured Bemf with a predetermined reference value in relation, for example, to the pulse sequences provided during the initialisation cycle. The predetermined reference value may be a calculated value, e.g. a stored value, a set value or a dynamically calculated value. The reference value may be a pre-measured value.

It will be appreciated that no additional control means or special step sequences are required to be able to execute the method according to the invention. Conventional stepper motor techniques such as microstepping could be used to provide the motor with control signals during the execution of the method according to the invention.

The initialisation method can be executed only once during assembly of the motor and its associated structural unit, during assembly, when a spare part is replaced, before a continuous operation of the associated structural unit or at other times.

Although the method has been described as part of an initialisation process, it can be used to detect stall during normal operation of the motor. For example, during a period of operation of the motor where constant speed is assumed at least one of the phases could be made currentless and the associated Bemf signal(s) could be processed in order to detect stall of the motor.

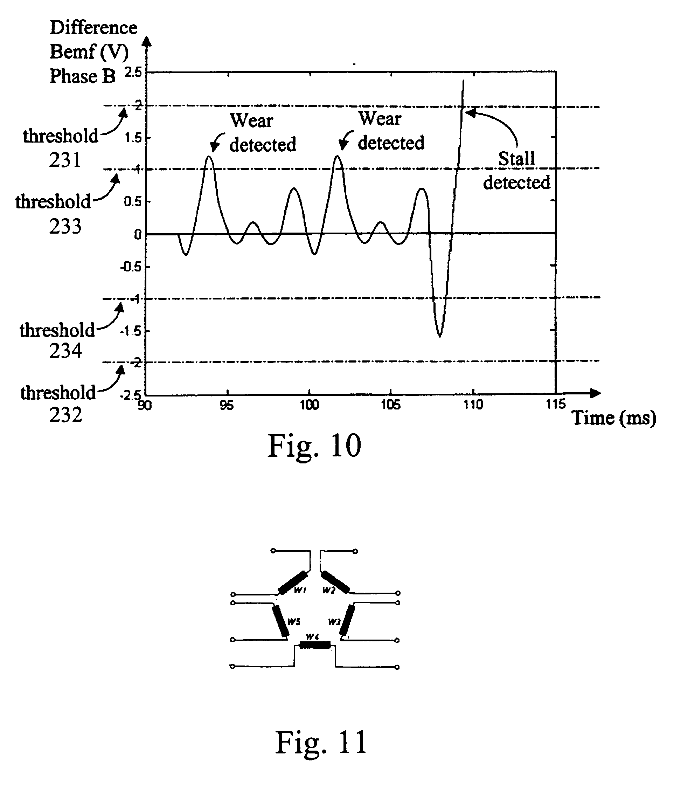

Furthermore the means for executing this method also enable for example self testing of the motor or its associated structural unit. Figure 10 shows a graph with a difference signal derived in the way just described and two sets of threshold levels. The largest threshold level 231, 232 represents a stall condition, while the lower threshold level 233, 234 can represent wear of the motor or the associated structural unit.

The method according to the invention allows the detection of for example two reference positions limiting the stroke of the associated structural unit. This could enable evaluation of the tolerances of the associated structural unit, prevent or signal errors resulting from limits to a required stroke to be from an associated structural unit. The stop 18 determining the reference position for the motor does not have to be directly linked to the motor. It could be associated with an element of the structural unit associated with the motor, or result from an action of an element not incorporated in the structural unit associated with the motor that causes the motor to stall. Any form of transmission can be used between the motor and the load, e.g. a crank and drive rod, a gear box, a belt transmission, a ratchet and pawl, a cam, a rotational or linear drive, etc.

Figures 11 to 15 show an embodiment of the present invention for a a multiphase, e.g. 5 or 3 phase motor respectively. Methods of the present invention can be applied to two or more phases by repeating the method phase-by-phase, e.g. up to five times to determine the actual stop position of the motor for a five phase motor. With stepper motors having M phases (where M>2), the method can generally be applied with from 1 up to M-1 phases operating in a currentless state. However, to provide maximum torque or smallest ripple in the movement of the motor during the initialisation, it is preferred that only a single phase is operated in a currentless state.

Another embodiment of the present invention for stepper motors with more then two phases is to execute the method according to the invention as follows. Bring the motor up to speed using all phases. Make at least two phases (preferably with a phase shift different from n x 180°) currentless while still using the other phases to maintain a constant initialisation speed. The Bemf signals from the currentless phases can be processed concurrently. As soon as stall is detected based on the Bemf measured in one of the currentless phases the method according to the invention proceeds to the last step in which the initialisation is carefully brought to an end.

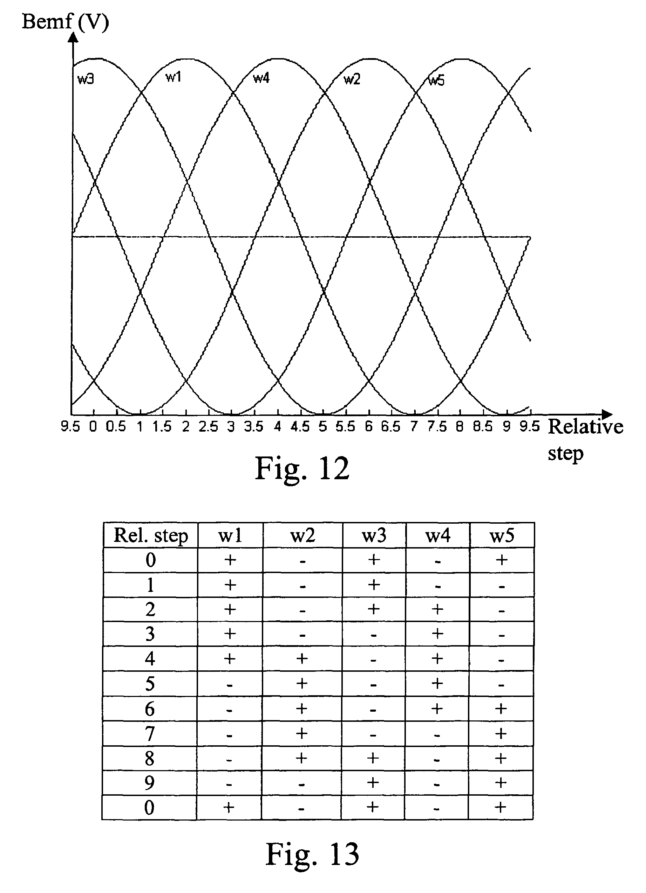

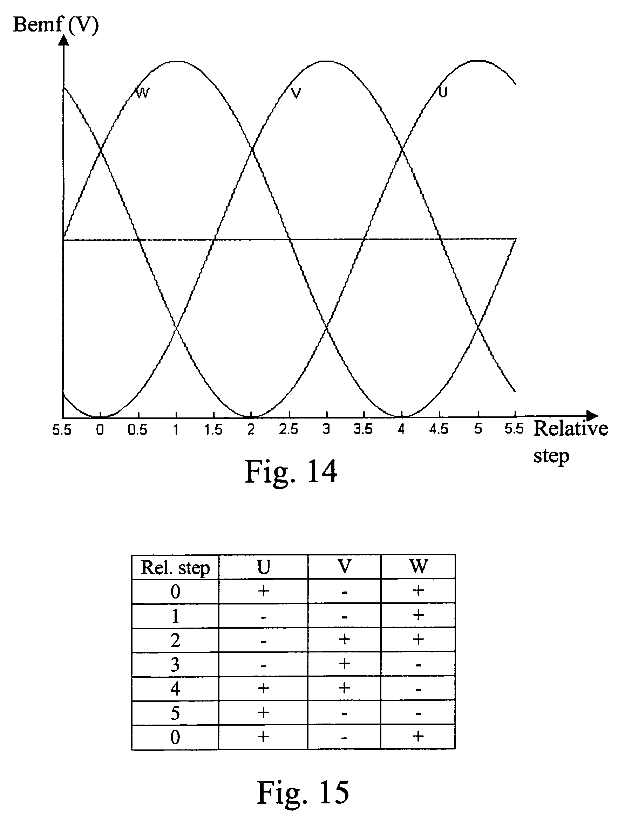

Fig. 11 is a schematic representation of the arrangement of the five phases of the motor W1 to W5 or another number of phases can be arranged around the rotor, e.g. three phases U, V, W (see Figs. 14 and 15). As in previous embodiments, Figure 2 shows the steps of the method for initialising the stepper motor. The method is performed by a motor controller. As previously described, instructions, stored in storage device, are executed by a processor. Samples of induced voltage are stored in a memory within processor or on a storage device. After entering step 200 the initialisation mode, the controller proceeds to step 201 and the motor is brought to a constant speed by activating the five phases w1 to w5 or, for example three phases U,V,W for a three phase embodiment with a conventional pulse sequence of the type shown in Figure 13 or 15, respectively. The Bemf from the five phases is shown in Fig. 12 and from the three phases in the three phase embodiment in Fig. 14.

One or more (up to 4) of the phases w1 to w5 is made currentless, or, for example, one or more of the three phases U, V, W is made currentless in the three phase embodiment, and the Bemf measured. The constant speed is maintained by pulse sequences on the other phase or phases.

At step 203 the controller receives a signal corresponding to the detected Bemf across the relative phase winding. Figure 12 shows the relationship between the measured Bemf's in the five phases and the relative step number. Fig. 14 shows the relationship between the measured Bemf's in the three phases and the relative step number for the three phase embodiment. The rate at which the Bemf is sampled determines the resolution of the eventual position determination. Any of the phases w1 to w5 (or of the phases U, V, W for the three phase case) can be sampled at a rate of, for example, 32 samples per completed step sequence. A number of consecutive samples are stored in the memory of a processor, or external memory, for subsequent calculations.

Each sample of the detected Bemf can be stored or buffered. After each sample is received, the current sample from the current operational cycle is for example compared with the corresponding sample from the previous operational cycle or any other processing method described above is used. In one embodiment a difference is calculated between corresponding samples. When a stall occurs the difference between the value of the current sample of the measured Bemf in the selected phase and the value of the measured Bemf stored for a corresponding sample of the previous step sequence will rise above a certain threshold. Step 204 checks whether the threshold is exceeded. If the threshold is not exceeded the controller determines that a stall has not occurred and continues to sample the Bemf, process the signal, e.g. compute the difference and monitor for exceeding the threshold in a further iteration of steps 203, 204. If the threshold is exceeded then a stall is determined to have occurred and the controller proceeds to step 205.

For example, at step 205 a hit time calculation can then be performed by determining the number of samples that have been stored in memory since the occurrence of a particular e vent where the relationship between the induced voltage and rotor position is known.

In a final step of the method according to the invention the motor is stopped after stall detection. The rotor is not driven any further, thus preventing any wear between the rotor and the stop. The detected reference position and the associated calculated relative step can now be stored. Depending on the system, this information can be stored in the memory and/or program of the motor controller. It can also be used in an improved control of the stepper motor or an improved control of the structural unit associated with the stepper motor. The information to be stored may include the start position and all further movements are related to this start position in the form of a difference or offset. The motor will than start at a defined relative position that can be made precise. Hence a load that changes with its angular position is referred to a reference point. If the motor is not related to that reference point, than the motor control will assume that the load value is different and the motor control will act as if that load is different. In this aspect of the present invention the control of the motor is always synchronised with the actual load, e.g. the load in a correct and precise angular position.

In accordance with the present invention one or more stop positions are determined very accurately and after this determination the motor can be very accurately. The start position of the motor is always known with respect to the actual position of the phases of the motor with respect to a reference point and hence with reference to the one or more stops. Then drive program for the motor is determined such that the control of the motor is synchronised with the position of the phases of the motor. Hence the position of the load is know at all times and not just when it has reached a stop. It is clear that the increase in precision in determining a reference position associated with stall of the stepper motor caused by a mechanical stop or an offset with respect to this stop position leads to an improved control of the stepper motor. The calculated relative step can be used as an offset in applying correct initial step sequences to achieve a maximum of dynamic response of the motor and its associated structural unit. It could also be used to increase positional precision of the stepper motor, for example when special step sequences are to be applied such as microstepping. It also increases robustness of the associated motor control in view of wear (for example of the mechanical stop), assembly and design tolerances (of the motor and the associated structural unit) and random operating conditions. Using the invention also collisions against the stop during "fast" moving (e.g. during weaving) can also be avoided because of the better motor control will allow avoidance of unnecessary collisions.

The controller of the present invention may be implemented in any suitable form, e.g. the present invention includes implementing the controller as an electronic device including an integrated circuit (IC), as an ASIC, as an electronic component including a programmable digital logic element such as a gate array, especially a field programmable gate array ( FPGA), as an electronic component having an embedded microprocessor, etc. The electronic device may include suitable drive circuits and power circuits for providing the required power to the windings of a motor. The various commands and actions to implement the method steps of the present invention may be loaded into the controller as software. The present invention includes software whose code is adapted to carry out any of the methods of the present invention when the software is executed on a suitable processing engine such as an embedded microprocessor or a programmable digital logic device.

The invention is not limited to the embodiments described herein, which may be modified or varied without departing from the scope of the invention.

**Claims**

1. A controller for detecting an operating state of a motor, the controller comprising control logic which is operable to:

   measure an induced voltage across at least one phase of the motor during a part of an operational cycle of the motor;
   processing the measured voltage to derive a processed value; and
   determine that the operating state has occurred when the processed value exceeds a threshold value.

2. A controller according to claim 1 wherein the operating state is a motor stall or a degree of wear of the motor.

3. A controller according to claim 1 or 2, wherein processing includes comparing the measured voltage with a stored value indicative of an expected voltage for that part of the operational cycle of the motor to derive a difference value and determining that the operating state has occurred when the difference value exceeds a threshold value.

4. A controller according to any previous claim, which is operable to measure the induced voltage across a currentless phase of the motor when the motor has reached a determined operating speed.

5. A controller according to claim 3 or 4 which is operable to acquire the expected voltage by measuring and storing the induced voltage across that phase of the motor during a previous operational cycle of the motor.

6. A controller according to claim 5 which is operable to acquire the expected voltage by measuring and storing the induced voltage across that phase of the motor during the immediately previous operational cycle of the motor.

7. A controller according to claim 5 or 6 which is operable to acquire the expected voltage during a time that the phase is currentless and the motor has reached a determined operating speed.

8. A controller according to any one of the preceding claims, wherein the motor is a stepper motor which is operable to measure the induced voltage at a rate which exceeds the rate of stepping during an operating cycle.

9. A controller according to any one of the preceding claims wherein the motor as at least two phases and the controller is operable to:

measure an induced voltage across two phases of the motor during an operational cycle of the motor; and
process, for each of the phases, the measured voltage to generate a processed value; and
determine that the operating state has occurred if the processed value exceeds a predetermined threshold value for either of the phases.

10. A controller according to any one of the preceding claims wherein the motor has at least two phases and the controller is operable to drive at least one of the phases during the period when the induced voltage is measured.

11. A controller according to any of the claims 2 to 10, which is further operable to stop the motor when the stall is detected.

12. A controller according to any one of the preceding claims wherein there are at least two threshold levels representing different operating states.

13. A motor comprising the controller of any of the previous claims.

14. A motor according to claim 13, wherein the motor is a stepper motor, a permanent magnet motor, a brushless DC motor.

15. A method of detecting an operating state of a motor comprising:

measuring an induced voltage across at least one phase of the motor during an operational cycle of the motor;
processing the measured voltage to derive a processed value; and
determining that the operating state has occurred when the processed value exceeds a threshold value.

16. Software for performing the method according to claim 15.

17. A machine-readable medium carrying the software of claim 16.

Fig. 1

Fig. 2

- 200 — Start initialisation
- 201 — Movement up to speed
- 202 — De-energise at least one phase
- 203 — Measure Bemf in de-energised phase(s); Determine difference signal
- 204 — Is difference signal > threshold value?
- NO
- YES
- 205 — Determine that rotor has hit stop; Hit time calculation Relative step calculation
- 206 — End initialisation

Fig. 3

Fig. 4

Fig. 5

Fig. 6

Fig. 7

Fig. 8

Fig. 9

Fig. 10

Fig. 11

Bemf (V)

| w3 | w1 | w4 | w2 | w5 |

9.5 0 0.5 1 1.5 2 2.5 3 3.5 4 4.5 5 5.5 6 6.5 7 7.5 8 8.5 9 9.5 Relative
step

## Fig. 12

| Rel. step | w1 | w2 | w3 | w4 | w5 |
|-----------|-----|-----|-----|-----|-----|
| 0 | + | - | + | - | + |
| 1 | + | - | + | - | - |
| 2 | + | - | + | + | - |
| 3 | + | - | - | + | - |
| 4 | + | + | - | + | - |
| 5 | - | + | - | + | - |
| 6 | - | + | - | + | + |
| 7 | - | + | - | - | + |
| 8 | - | + | + | - | + |
| 9 | - | - | + | - | + |
| 0 | + | - | + | - | + |

## Fig. 13

Bemf (V)

5.5  0  0.5  1  1.5  2  2.5  3  3.5  4  4.5  5  5.5  Relative step

Fig. 14

| Rel. step | U | V | W |
|---|---|---|---|
| 0 | + | - | + |
| 1 | - | - | + |
| 2 | - | + | + |
| 3 | - | + | - |
| 4 | + | + | - |
| 5 | + | - | - |
| 0 | + | - | + |

Fig. 15

**European Patent Office**

## EUROPEAN SEARCH REPORT

Application Number

EP 05 01 8747

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/024008 A1 (YAMADA YOSHIHISA) 3 February 2005 (2005-02-03) * paragraphs [0054], [0055] * | 1,15 | H02P8/08 |
| A | | 2-14,16, 17 | |
| X | US 2005/116678 A1 (YAMADA YOSHIHISA) 2 June 2005 (2005-06-02) * paragraph [0064] * | 1,15 | |
| A | | 2-14,16, 17 | |
| X | US 6 680 597 B1 (CATELLANI DIDIER ET AL) 20 January 2004 (2004-01-20) * column 6, lines 38-47 * | 1,15 | |
| A | | 2-14,16, 17 | |
| X | US 2005/006966 A1 (OISHI MASAKI ET AL) 13 January 2005 (2005-01-13) * paragraph [0043] * | 1,15 | |
| A | | 2-14,16, 17 | TECHNICAL FIELDS SEARCHED (IPC) H02P |
| A,D | US 5 032 781 A (KRONENBERG ET AL) 16 July 1991 (1991-07-16) * abstract * * column 1, lines 34-53 * | 1-17 | |

The present search report has been drawn up for all claims

| Place of search | Date of completion of the search | Examiner |
|---|---|---|
| Munich | 21 November 2005 | Roider, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 05 01 8747

This annex lists the patent family members relating to the patent documents cited in the above-mentioned European search report.
The members are as contained in the European Patent Office EDP file on
The European Patent Office is in no way liable for these particulars which are merely given for the purpose of information.

21-11-2005

| Patent document cited in search report | | Publication date | Patent family member(s) | | Publication date |
|---|---|---|---|---|---|
| US 2005024008 | A1 | 03-02-2005 | JP | 2005020880 A | 20-01-2005 |
| US 2005116678 | A1 | 02-06-2005 | CN | 1612464 A | 04-05-2005 |
| | | | JP | 2005137157 A | 26-05-2005 |
| US 6680597 | B1 | 20-01-2004 | AT | 279809 T | 15-10-2004 |
| | | | DE | 60014905 D1 | 18-11-2004 |
| | | | DE | 60014905 T2 | 13-10-2005 |
| | | | EP | 1194999 A1 | 10-04-2002 |
| | | | WO | 0101558 A1 | 04-01-2001 |
| | | | FR | 2795886 A1 | 05-01-2001 |
| | | | JP | 2003504003 T | 28-01-2003 |
| US 2005006966 | A1 | 13-01-2005 | DE | 102004027699 A1 | 30-12-2004 |
| | | | JP | 2004364450 A | 24-12-2004 |
| US 5032781 | A | 16-07-1991 | AU | 623451 B2 | 14-05-1992 |
| | | | AU | 4543489 A | 23-08-1990 |
| | | | DE | 3921462 A1 | 16-08-1990 |
| | | | EP | 0382887 A1 | 22-08-1990 |
| | | | ES | 2042903 T3 | 16-12-1993 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0763613 A
- EP 382887 A

- EP 763613 A